# FASCICULE DE BREVET EUROPEEN

(11) **EP 2 425 375 B1**
(45) Date de publication et mention de la délivrance du brevet: **29.10.2014**
(21) Numéro de dépôt: 10714887.6
(22) Date de dépôt: 26.04.2010
(51) Int. Cl.: G06K 9/00

(54) **DISPOSITIF D'IDENTIFICATION D'UNE PERSONNE PAR SON EMPREINTE**
VORRICHTUNG ZUR IDENTIFIZIERUNG EINER PERSON MITTELS SEINE FINGERABDRÜCK
DEVICE FOR IDENTIFYING A PERSON BY A PRINT THEREOF

(30) Priorité: 27.04.2009 FR 0952722
(43) Date de publication de la demande: 07.03.2012
(73) Titulaire: MORPHO, 92130 Issy Les Moulineaux (FR)
(72) Inventeur: FOURRE, Joël-Yann, F-75015 Paris (FR); PICARD, Sylvaine, F-75015 Paris (FR)
(74) Mandataire: Maillet, Alain
(86) Numéro de dépôt international: PCT/EP2010/055514
(87) Numéro de publication internationale: WO 2010/125019

(56) Documents cités:
- WO-A1-85/03362
- US-A- 397 511
- US-A- 4 120 585
- US-A- 4 340 300
- US-A- 4 428 670
- US-A1- 2006 120 576
- FATEHPURIA A., LAU D.L. AND HASSEBROOK L.G.: "Acquiring a 2D rolled equivalent fingerprint image from a non contact 3d finger scan" BIOMETRIC TECHNOLOGY FOR HUMAN IDENTIFICATION III, [Online] vol. 6202, 2006, pages 62020C-1-62020C-8, XP002571940 Extrait de l'Internet: URL:http://spiedl.aip.org/getpdf/servlet/G etPDFServlet?filetype=pdf&id=PSISDG0062020 0000162020C000001&idtype=cvips&prog=normal > [extrait le 2010-03-08]
- SAGA S., KAJIMOTO H. AND TACHI S.: "High-resolution tactile sensor using the deformation of a reflection image" SENSOR REVIEW, vol. 27, no. 1, 2007, pages 35-42, XP002571941
- JOHNSON M.K. AND ADELSON E.H.: "retrographic sensing for the measurement of surface texture and shape" CVPR 2009, 20 juin 2009 (2009-06-20), XP002571942

## Description

La présente invention concerne un dispositif d'identification ou d'authentification d'une personne par son empreinte, ainsi qu'un procédé d'identification ou d'authentification mis en oeuvre par un tel dispositif d'identification ou d'authentification. Elle trouve application dans le domaine de la reconnaissance biométrique et en particulier dans le domaine de l'identification ou de l'authentification par analyse des empreintes digitales ou palmaires d'une personne.

En biométrie, il y a deux processus:
- l'identification au cours de laquelle, à partir de l'information biométrique, on recherche l'identité d'une personne dans une base de données; et
- l'authentification au cours de laquelle, à partir de l'identité prétendue d'une personne et des données biométriques, on prouve l'identité. L'identité prétendue pouvant être obtenue à partir d'un badge ou d'un code.

La reconnaissance biométrique est utilisée pour sécuriser des installations comme par exemple des bâtiments ou des machines ou pour obtenir la délivrance de droits, comme par exemple la délivrance d'une carte d'identité, le versement d'une pension... Cette technologie permet de s'affranchir de codes d'accès ou de cartes qui peuvent être volés ou falsifiés, ou permet d'authentifier le porteur de ces cartes ou le détenteur des codes. L'utilisation de cette technologie permet de renforcer la sécurité dans la mesure où la probabilité que deux personnes aient deux biométries identiques est quasiment nulle.

Dans la suite de la description, le terme "empreinte" s'appliquera aussi bien à une empreinte digitale qu'à une empreinte palmaire.

Dans l'état de la technique, un procédé d'identification d'une personne à partir de son empreinte consiste en:
- une étape de capture d'une image de l'empreinte à identifier par au moins un capteur,
- une étape de génération d'un gabarit associé à l'image capturée par extraction de points d'intérêt de l'image, et
- une étape de vérification de l'identité de l'individu.

L'étape de vérification de l'identité de l'individu consiste par exemple en:
- une étape de recherche dans une base de données de gabarits de référence, du gabarit de référence présentant le plus de similarités avec ledit gabarit associé à l'image capturée,
- une étape de mesure de la ressemblance entre ledit gabarit associé à l'image capturée et ledit gabarit de référence ainsi trouvé, et
- une étape de prise de décision concernant l'identité de la personne à partir du résultat de la mesure.

Dans l'état de la technique, un procédé d'authentification d'une personne à partir de son empreinte consiste en:
- une étape de capture d'une image de l'empreinte à identifier par au moins un capteur,
- une étape de génération d'un gabarit associé à l'image capturée par extraction de points d'intérêt de l'image, et
- une étape d'authentification de la personne.

L'étape d'authentification de la personne consiste par exemple en:
- une étape de récupération de l'identité prétendue de la personne,
- une étape de recherche du gabarit de référence associé à l'identité prétendue ainsi récupérée,
- une étape de mesure de la ressemblance entre ledit gabarit associé à l'image capturée et ledit gabarit de référence ainsi trouvé, et
- une étape de prise de décision concernant l'identité de la personne à partir du résultat de la mesure.

L'étape de recherche du gabarit de référence peut consister en une récupération du gabarit enregistré sur une carte, ou d'un gabarit retrouvé dans une base de données à partir d'un code.

Dans le cadre d'une capture tridimensionnelle (3D) de l'empreinte, un tel procédé d'identification est mis en oeuvre à l'aide d'un dispositif d'identification qui comprend une pluralité de capteurs du type caméras ou CCD, associés à une pluralité de moyens d'illumination et des moyens de traitement qui à partir des images capturées par les différents capteurs, mettent en oeuvre l'étape de comparaison, l'étape de mesure et l'étape de prise de décision. Une identification basée sur une capture 3D permet d'obtenir de meilleurs résultats qu'une identification basée sur une capture bidimensionnelle (2D).

Un tel dispositif d'identification est divulgué dans le document US-A-2006-120576. Lors de la capture des images, la personne désirant être identifiée doit maintenir sa main immobile devant les capteurs pour que les images capturées soient suffisamment nettes pour être exploitables. Une telle capture est dite sans contact.

Un tel mode de fonctionnement constitue un désavantage car il est souvent difficile pour une personne de maintenir sa main suffisamment immobile durant l'étape de capture.

Dans le cadre d'une capture bidimensionnelle (2D) de l'empreinte, un dispositif d'identification comprend une plaque rigide transparente, des moyens d'illumination, un capteur et des moyens de traitement. Les moyens d'illumination et le capteur sont disposés derrière la plaque sur laquelle la personne vient appuyer son doigt. L'image ainsi capturée est ensuite traitée par les moyens de traitement. L'utilisation d'un tel dispositif d'identification entraîne l'écrasement du doigt lorsqu'il est en appui sur la plaque rigide et, par conséquent, la déformation de l'empreinte. Le plus souvent ces systèmes ne restituent une image fidèle de l'empreinte que pour la partie du doigt (resp. de la paume) en contact avec la plaque, mais en fonction de la force d'appui sur la plaque ou d'autres facteurs physiques, l'empreinte peut être plus ou moins déformée et la surface imagée plus ou moins grande entraînant une identification incertaine. Une telle capture est dite sans contact. En particulier pour la paume, il est impossible de faire une acquisition de l'ensemble de la surface de manière confortable en écrasant la main sur une plaque.

Une capture tridimensionnelle de l'empreinte permet d'augmenter la surface d'analyse et donc le nombre d'informations relatives à l'empreinte tout en diminuant les déformations par rapport à une capture bidimensionnelle avec contact.

Un objet de la présente invention est de proposer un dispositif d'identification ou d'authentification d'une personne par son empreinte et un procédé d'identification ou d'authentification associé au dispositif correspondant qui ne présente pas les inconvénients de l'état de la technique et qui, en particulier, permet une capture d'une grande surface de l'empreinte en conservant la facilité d'utilisation des capteurs avec contact.

A cet effet, est proposé un dispositif d'identification ou d'authentification d'une personne par son empreinte, le dispositif d'identification ou d'authentification comprenant:
- des moyens d'appui comprenant un fond transparent et un bloc transparent supporté par ledit fond et sur lequel la partie du corps portant l'empreinte vient appuyer, la surface du bloc transparent sur laquelle la partie du corps portant l'empreinte vient appuyer présente une mire, le bloc transparent étant constitué d'un matériau souple qui se déforme et épouse la forme de la partie du corps portant l'empreinte lorsque celle-ci appuie dessus,
- un moyen de capture d'une image de ladite empreinte et de la mire à travers lesdits moyens d'appui,
- des moyens d'analyse de l'image de la mire déformée,
- des moyens de construction d'un gabarit de l'empreinte à partir de l'image de la mire ainsi analysée,
- des moyens de vérification de l'identité de la personne ou des moyens d'authentification de la personne à partir du gabarit ainsi construit.

Avantageusement, les moyens d'appui comprennent un cadre rigide solidaire du fond et formant avec ce dernier un réceptacle dans lequel le bloc transparent est contraint.

Avantageusement, la mire est transparente pour certaines longueurs d'onde et opaque pour d'autres.

Avantageusement, la surface du bloc transparent présentant la mire est préformée en fonction du type d'empreinte pouvant être identifiée.

Avantageusement, le bloc transparent est du type enveloppe de silicone contenant du gel de silicone ou un liquide.

Selon un mode de réalisation particulier, l'axe de visée du moyen de capture est orthogonal au fond.

Selon un autre mode de réalisation particulier, l'axe de visée du moyen de capture forme avec la normale au fond un angle supérieur à l'angle limite de réflexion totale du bloc transparent.

Selon un mode de réalisation particulier, les moyens de construction du gabarit de l'empreinte comprennent des moyens de calcul d'une transformation géométrique de la mire déformée en la mire non déformée, des moyens de transformation géométrique prévus pour appliquer ladite transformation géométrique ainsi calculée à l'image capturée de l'empreinte, et des moyens de génération d'un gabarit à partir de l'image ainsi transformée de l'empreinte.

Selon un autre mode de réalisation particulier, les moyens de construction du gabarit de l'empreinte comprennent des moyens d'approximation de la surface tridimensionnelle de la mire, des moyens d'application de l'image capturée de l'empreinte sur la surface tridimensionnelle ainsi approximée, et des moyens de génération d'un gabarit à partir de l'image ainsi transformée de l'empreinte.

L'invention propose également un procédé d'identification ou d'authentification d'une personne par son empreinte, ledit procédé étant caractérisé en ce qu'il comprend les étapes:
- de mise en appui de l'empreinte à identifier sur un bloc transparent supporté par un fond transparent, la surface du bloc transparent sur laquelle la partie du corps portant l'empreinte vient appuyer présente une mire, le bloc transparent étant constitué d'un matériau souple qui se déforme et épouse la forme de la partie du corps portant l'empreinte lorsque celle-ci appuie dessus,
- de capture d'une image de l'empreinte et de la mire à travers lesdits moyens d'appui,
- d'analyse de l'image de la mire déformée,
- de construction d'un gabarit de l'empreinte à partir de l'image de la mire ainsi analysée,
- de vérification de l'identité de la personne ou d'authentification de la personne à partir du gabarit ainsi construit.

Selon un mode de réalisation particulier, l'étape de construction du gabarit de l'empreinte comprend une étape de calcul d'une transformation géométrique de la mire déformée en la mire non déformée, une étape d'application de ladite transformation géométrique ainsi calculée à l'image capturée de l'empreinte, et une étape de génération d'un gabarit à partir de l'image ainsi transformée de l'empreinte.

Selon un autre mode de réalisation particulier, l'étape de construction du gabarit de l'empreinte comprend une étape d'approximation de la surface tridimensionnelle de la mire, une étape d'application de l'image capturée de l'empreinte sur la surface tridimensionnelle ainsi approximée, et une étape de génération d'un gabarit à partir de l'image ainsi transformée de l'empreinte.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une représentation schématique d'un dispositif d'identification ou d'authentification d'une personne à partir de son empreinte selon l'invention, et
la Fig. 2 représente un algorithme d'un procédé d'identification ou d'authentification d'une personne à partir de son empreinte selon l'invention.

Dans la suite de la description, il sera fait référence principalement à l'identification que se soit pour le dispositif ou pour le procédé. La différence entre l'identification et l'authentification réside dans le traitement du gabarit généré qui est comparé à un ensemble de gabarits de référence d'une base de données dans le cas de l'identification et qui est comparé à un gabarit de référence dans le cas de l'authentification, gabarit de référence qui est obtenu à partir d'un badge ou d'un code, par exemple.

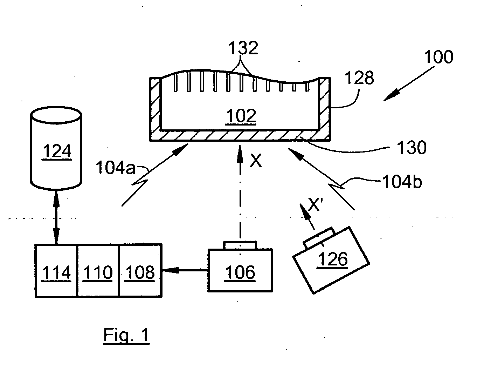

La Fig. 1 représente un dispositif d'identification ou d'authentification 100 d'une personne par son empreinte. Le dispositif d'identification 100 comprend:
- des moyens d'appui 102, 130 comprenant un fond transparent 130 et un bloc transparent 102 supporté par le fond 130 et sur lequel la partie du corps portant l'empreinte vient appuyer, la surface du bloc transparent 102 sur laquelle la partie du corps portant l'empreinte vient appuyer présente une mire 132, le bloc transparent 102 étant constitué d'un matériau souple qui se déforme et épouse la forme de la partie du corps portant l'empreinte lorsque celle-ci appuie dessus,
- un moyen de capture 106, 126 d'une image de ladite empreinte et de la mire 132 à travers lesdits moyens d'appui 102, 130,
- des moyens d'analyse 108 de l'image de la mire 132 qui est déformée par la pression exercée par la partie du corps portant l'empreinte,
- des moyens de construction 110 d'un gabarit de l'empreinte à partir de l'image de l'empreinte ainsi capturée et de l'image de la mire 132 ainsi analysée,
- des moyens de vérification 114 de l'identité de la personne à partir du gabarit ainsi construit.

La surface du bloc transparent 102 sur laquelle la partie du corps portant l'empreinte vient appuyer constitue la surface d'acquisition.

Dans le cas d'un dispositif d'authentification 100, les moyens de vérification 114 sont remplacés par des moyens d'authentification 114 de la personne à partir du gabarit ainsi construit.

Le moyen de capture 106, 126 est disposé en aval des moyens d'appui 102, 130.

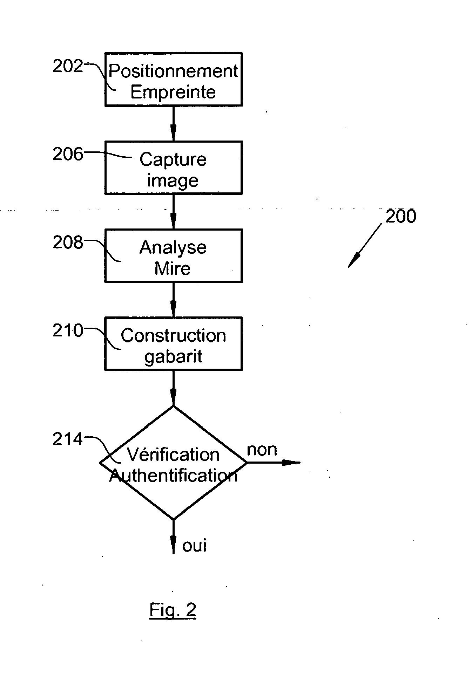

La Fig. 2 montre un procédé d'identification ou d'authentification 200 d'une personne par son empreinte. Le procédé d'identification 200 est mis en oeuvre par le dispositif d'identification 100 selon l'invention. Le procédé d'identification 200 comprend les étapes réalisées par le dispositif d'identification 100:
- de mise en appui 202 de l'empreinte à identifier sur le bloc transparent 102,
- de capture 206 d'une image de l'empreinte et de la mire 132 à travers lesdits moyens d'appui 102, 130,
- d'analyse 208 de l'image de la mire 132 déformée à partir de l'image ainsi capturée,
- de construction 210 du gabarit de l'empreinte à partir de l'image de l'empreinte ainsi capturée et de l'image de la mire 132 ainsi analysée.
- de vérification 214 de l'identité de la personne à partir du gabarit ainsi construit.

Dans le cas d'un procédé d'authentification 200, l'étape de vérification 214 est remplacée par une étape d'authentification 214 de la personne à partir du gabarit ainsi construit.

Un tel dispositif d'identification 100 permet ainsi une capture d'une image de l'empreinte à identifier et sa transformation en un gabarit, l'empreinte étant maintenue en position durant la capture de l'image grâce à la présence du bloc transparent souple 102. En effet, la main ou le doigt vient appuyer sur le bloc transparent 102 au cours de l'étape de mise en appui 202 et y est maintenu. Les mouvements de la main de la personne sont ainsi évités et les images capturées sont de bonne qualité tout en permettant de générer et comparer des gabarits de l'empreinte à identifier.

Le bloc transparent 102 est du type enveloppe de silicone contenant du gel de silicone ou un liquide.

Les matériaux constituant les moyens d'appui 102, 130 doivent être optiquement compatibles avec une capture d'image à travers le fond 130 et le bloc transparent 102. Ces matériaux doivent ainsi être fortement transparents et non diffusants. Le fond 130 est par exemple en plastique transparent (PMMA, PC) ou en verre.

On dit que le bloc transparent 102 se déforme et épouse la forme de l'empreinte, lorsque sous les forces de pression du doigt ou de la main, le bloc transparent 102 épouse la forme du doigt, respectivement de la main dont l'empreinte doit être identifiée. La surface du bloc transparent 102 sur laquelle l'empreinte prend appui est choisie de façon à favoriser le couplage optique avec la peau. La matière constituant la surface du bloc transparent 102 doit donc être suffisamment souple pour limiter la présence d'un film d'air entre la peau et le bloc transparent 102. Le silicone est un matériau particulièrement bien adapté.

La pression exercée par le doigt ou la main doit permettre l'écrasement du bloc transparent 102 sans que la peau du doigt ou de la main soit écrasée de manière excessive comme dans le cas de l'état de la technique.

Dans le cas d'une empreinte palmaire, l'enfoncement de la main est de l'ordre de 1 cm.

Dans le cas d'une empreinte digitale, l'enfoncement du doigt est de l'ordre de 0,4 cm.

Le moyen de capture 106, 126 qui est mis en oeuvre au cours de l'étape de capture 206, est de préférence du type caméra dont l'axe de visée respectivement X, X' est orienté vers le fond 130 de manière à voir l'empreinte à identifier par transparence à travers le fond 130, le bloc transparent 102 et la mire 132.

Pour améliorer l'éclairement de l'empreinte à identifier, des moyens d'éclairement 104a et 104b prenant la forme de lampes d'éclairage sont disposés de part et d'autre de l'axe de visée de la caméra 106, 126 mise en oeuvre.

Les moyens d'éclairement 104a et 104b peuvent être combinés de différentes manières avec les moyens de capture 106, 126.

Selon un premier exemple, l'axe X des moyens de capture 106 peut être orthogonal à la surface d'acquisition qui est ici parallèle au fond 130 et l'axe de chaque moyen d'éclairement 104a, 104b peut former avec la surface d'acquisition, un angle inférieur à l'angle limite de réflexion totale du bloc transparent 102.

Selon un deuxième exemple, l'axe X des moyens de capture 106 peut être orthogonal à la surface d'acquisition qui est ici parallèle au fond 130 et l'axe de chaque moyen d'éclairement 104a, 104b peut former avec la normale à la surface d'acquisition, un angle supérieur à l'angle limite de réflexion totale du bloc transparent 102. L'éclairage est alors en réflexion totale sur la surface d'acquisition du bloc transparent 102 lorsqu'il n'y a pas contact avec un doigt.

Selon un troisième exemple, l'axe X des moyens de capture 106 peut former avec la normale à la surface d'acquisition qui est ici parallèle au fond 130 un angle supérieur à l'angle limite de réflexion totale du bloc transparent 102, et l'axe des moyens d'éclairement 104a, 104b est orthogonal à la surface d'acquisition qui est ici parallèle au fond 130. L'éclairage est alors en réflexion totale sur la surface d'acquisition du bloc transparent 102 lorsqu'il n'y a pas contact avec un doigt.

Selon un quatrième exemple, l'axe X des moyens de capture 106 peut former avec la normale à la surface d'acquisition qui est ici parallèle au fond 130 un angle supérieur à l'angle limite de réflexion totale du bloc transparent 102, et l'axe des moyens d'éclairement 104a, 104b forme également avec la normale à la surface d'acquisition qui est ici parallèle au fond 130 un angle supérieur à l'angle limite de réflexion totale du bloc transparent 102. L'axe X des moyens de capture 106 et l'axe des moyens d'éclairement 104a, 104b sont alors sensiblement symétriques par rapport à la normale à la surface d'acquisition (cas d'imagerie en réflexion totale en ombroscopie).

Au cours de l'étape d'analyse 208, les moyens d'analyse 108 analysent l'image de la mire 132 telle qu'elle apparaît déformée sur l'image capturée.

Au cours de l'étape de construction 210, les moyens de construction 110 reconstruisent un gabarit de l'empreinte à partir de l'image de l'empreinte capturée et de l'image de la mire 132 ainsi analysée par extraction de points d'intérêts de l'image de l'empreinte.

Par exemple, dans le cas d'un traitement bidimensionnel, l'étape de construction 210 du gabarit de l'empreinte comprend une étape de calcul d'une transformation géométrique de la mire 132 déformée en la mire 132 non déformée, une étape d'application de ladite transformation géométrique ainsi calculée à l'image capturée de l'empreinte, et une étape de génération d'un gabarit à partir de l'image ainsi transformée de l'empreinte.

A cette fin, les moyens de construction 110 du gabarit de l'empreinte comprennent des moyens de calcul d'une transformation géométrique de la mire 132 déformée en la mire 132 non déformée, des moyens de transformation géométrique prévus pour appliquer ladite transformation géométrique ainsi calculée à l'image capturée de l'empreinte, et des moyens de génération d'un gabarit à partir de l'image ainsi transformée de l'empreinte.

Ainsi, à partir de l'image déformée de la mire 132 et par connaissance de sa forme non déformée, les moyens de calcul génèrent une fonction de transformation géométrique qui permet de redresser l'image de la mire 132 déformée en une image de la mire 132 non déformée.

La fonction de transformation géométrique est alors appliquée à l'image de l'empreinte capturée afin de la redresser. Après quoi, le gabarit peut être généré.

Dans le cas du calcul et de l'application d'une transformation géométrique, cette transformation géométrique peut être une homographie.

Par exemple, dans le cas où la mire 132 est représentée sous forme d'une grille constituée de cellules, une homographie permettant de passer de chaque cellule de la grille déformée à une cellule droite et à la résolution voulue est calculée et d'estimer la pose des cellules déformées On fait ainsi une approximation tridimensionnelle de la surface par des facettes planes (approximation par morceaux).

Une autre méthode repose sur l'utilisation d'un modèle tridimensionnel comme par exemple un cylindre dont on adapte le diamètre en fonction du doigt et de la déformation observée. Une fois les caractéristiques du modèle connues, on applique la transformation inverse pour déplier l'empreinte

La taille des cellules est sensiblement supérieure à la fréquence des crêtes pour ne pas poser de problème de détection d'une de ces deux informations. Les cellules seront d'au moins 3 mm de côté.

Si on ne veut pas utiliser une telle approximation, on établit le champ de distorsion observé lors de l'étape d'approximation de la surface tridimensionnelle et on applique à l'image capturée, le champ de déplacement inverse permettant de ramener la grille à la grille droite désirée à la résolution désirée.

Dans le cas d'un traitement tridimensionnel, l'étape de construction du gabarit de l'empreinte comprend une étape d'approximation de la surface tridimensionnelle de la mire 132, une étape d'application de l'image capturée de l'empreinte sur la surface tridimensionnelle ainsi approximée, et une étape de génération d'un gabarit à partir de l'image ainsi transformée de l'empreinte.

A cette fin, les moyens de construction 110 du gabarit de l'empreinte comprennent des moyens d'approximation de la surface tridimensionnelle de la mire 132, des moyens d'application de l'image capturée de l'empreinte sur la surface tridimensionnelle ainsi approximée, et des moyens de génération d'un gabarit à partir de l'image ainsi transformée de l'empreinte.

Ainsi, à partir de l'image déformée de la mire 132 et par connaissance de sa forme non déformée, les moyens d'approximation déterminent la surface tridimensionnelle de la partie du corps portant l'empreinte.

Les moyens d'application appliquent sur cette surface l'image de l'empreinte capturée, de manière à calquer l'image de l'empreinte capturée sur la surface approximée. Après quoi, le gabarit peut être généré.

Dans ce cas, ce sont des gabarits relatifs à des empreintes tridimensionnelles qui sont générés.

Pour rester compatibles avec les bases de données qui sont généralement constituées de gabarits relatifs à des empreintes bidimensionnelles, une étape de redressement de l'image de l'empreinte appliquée sur la surface tridimensionnelle peut être effectuée préalablement à l'étape de génération du gabarit.

Le document intitulé "High-Resolution Structured Light Range Scanner with Automatic Calibration" écrit par A. M. BRONSTEIN et al. et publié le 4 août 2003 présente, dans le cadre d'une analyse faciale, des étapes d'approximation de la surface tridimensionnelle d'une mire et une étape d'application de l'image capturée de la face sur la surface tridimensionnelle ainsi approximée.

Le tracé de la mire 132 est connu des moyens d'analyse 108 et de construction 110. Il peut s'agir par exemple, de deux ensembles de droites sécantes formant une grille, ces droites étant les plus fines possibles pour limiter la dégradation de l'image de l'empreinte tout en restant suffisamment visibles pour être analysées.

De préférence, la mire 132 est transparente pour certaines longueurs d'onde et opaque pour d'autres, ainsi l'empreinte est visible à travers les lignes, qui peuvent alors être plus larges.

Comme dans le cas du procédé d'identification de l'état de la technique, l'étape de vérification 214 peut consister, par exemple, en:
- une étape de recherche dans une base de données 124 de gabarits de référence, du gabarit de référence présentant le plus de similarités avec ledit gabarit associé à l'image capturée,
- une étape de mesure de la ressemblance entre ledit gabarit associé à l'image capturée et ledit gabarit de référence ainsi trouvé, et
- une étape de prise de décision concernant l'identité de la personne à partir du résultat de la mesure.

Comme dans le cas du procédé d'authentification de l'état de la technique, l'étape d'authentification 214 peut consister, par exemple, en:
- une étape de récupération de l'identité prétendue de la personne,
- une étape de recherche du gabarit de référence associé à l'identité prétendue ainsi récupérée,
- une étape de mesure de la ressemblance entre ledit gabarit associé à l'image capturée et ledit gabarit de référence ainsi trouvé, et
- une étape de prise de décision concernant l'identité de la personne à partir du résultat de la mesure.

Dans le cadre d'une identification par gabarit relatif à une empreinte tridimensionnelle, les étapes d'identification 214 et d'authentification 214 mettent en oeuvre des processus similaires. Des informations telles que la courbure locale du doigt et l'orientation de l'empreinte découlant naturellement du mode d'acquisition viennent enrichir la représentation biométrique de l'empreinte.

Pour contraindre le bloc transparent 102 et éviter son fluage latéral lorsque le doigt ou la main est mis en appui, les moyens d'appui comprennent également un cadre rigide 128 solidaire du fond 130 et formant avec ce dernier un réceptacle dans lequel le bloc transparent 102 est contraint. Le cadre 128 est monobloc avec le fond 130 et est réalisé dans le même matériau. L'expansion du bloc transparent 102 sous l'effet de la pression du doigt ou de la main s'effectue alors uniquement par expansion verticale en dehors des zones d'appui. La mire 132 se déforme alors quasiment uniquement verticalement et très peu horizontalement, facilitant ainsi l'analyse de son image.

Pour éviter de perdre des informations relatives à l'empreinte à identifier, la mire 132 est translucide, laissant voir ainsi par transparence, l'empreinte à identifier. Pour faciliter la séparation de la mire 132 et de l'empreinte sur l'image capturée, la mire 132 est réalisée dans une couleur différente de celle de l'empreinte à identifier. Ainsi un filtrage de l'image capturée par couleur permettra d'éliminer la mire 132 en conservant les informations relatives à l'empreinte à identifier. La mire 132 est ainsi transparente pour certaines longueurs d'onde et opaque pour d'autres. Par exemple, la mire 132 absorbe le rouge et laisse passer le vert. En capturant l'image de la mire 132 et de l'empreinte avec une caméra couleur, l'image de la mire et de l'empreinte se retrouve sur le canal rouge, et l'image de l'empreinte non dégradée par la mire 132 se retrouve sur le canal vert.

Pour faciliter le positionnement du doigt ou de la main de la personne à identifier, et assurer une pression uniforme sur pratiquement toute la mire 132, la surface du bloc transparent 102 présentant la mire 132 est préformée en fonction du type d'empreinte pouvant être identifiée. En particulier, dans le cas d'une empreinte palmaire à identifier, ladite surface prendra une forme bombée au niveau de la paume et une forme creusée au niveau de la naissance des doigts. Ce préformage permet un positionnement naturel de l'utilisateur et limite l'écrasement du bloc transparent 102.

Dans un premier mode de réalisation, l'axe de visée X du moyen de capture 106, est orthogonal à la surface d'acquisition qui est ici parallèle au fond 130.

Dans un deuxième mode de réalisation, l'axe de visée X' du moyen de capture 126 forme avec la normale à la surface d'acquisition qui est ici parallèle au fond 130, un angle supérieur à l'angle limite de réflexion totale du bloc transparent 102. Dans le cas d'un bloc transparent 102 en silicone, l'indice de réfraction de l'ordre de 1,46 et l'angle limite de réflexion totale est de 43° environ. Ainsi, le dispositif d'imagerie et, en particulier, le moyen de capture 106 sont en réflexion totale frustrée. Si un doigt est en contact avec la surface du bloc transparent 102, le doigt est vu par le moyen de capture 106. Sinon, il y a réflexion totale, et le moyen de capture 106 ne reçoit aucune image pertinente.

Ce positionnement permet également une meilleure stabilité numérique des étapes d'approximation de la surface tridimensionnelle de la mire et de construction 210, c'est à dire que les grandeurs mises en jeu dans la reconstruction tridimensionnelle sont plus grandes, et les erreurs introduites des étapes d'approximation et de construction sont plus faibles. Cela permet donc en pratique d'obtenir une reconstruction en tridimensionnelle plus fidèle.

Lorsque l'image de l'empreinte appliquée sur la surface tridimensionnelle est redressée, préalablement à la génération du gabarit, celui-ci présente par rapport à une acquisition en contact sur une plaque des distorsions moindres et une surface supérieure.

Ainsi, si la connaissance des informations tridimensionnelles n'est pas nécessaire, les points de l'empreinte tels qu'ils apparaissent sur la surface tridimensionnelle sont ramenés à une surface plane et à une bonne résolution. Cela permet ainsi d'utiliser des bases existantes ou de se connecter à des systèmes existants.

Bien entendu, la présente invention n'est pas limitée aux exemples et modes de réalisation décrits et représentés, mais elle est susceptible de nombreuses variantes accessibles à l'homme du métier.

## Revendications

1. Dispositif d'identification ou d'authentification (100) d'une personne par son empreinte, le dispositif d'identification ou d'authentification (100) comprenant:
- des moyens d'appui (102, 130) comprenant un fond transparent (130) et un bloc transparent (102) supporté par ledit fond (130) et sur lequel la partie du corps portant l'empreinte vient appuyer, la surface du bloc transparent (102) sur laquelle la partie du corps portant l'empreinte vient appuyer présente une mire (132), le bloc transparent (102) étant constitué d'un matériau souple qui se déforme et épouse la forme de la partie du corps portant l'empreinte lorsque celle-ci appuie dessus,
- un moyen de capture (106, 126) d'une image de ladite empreinte et de la mire (132) à travers lesdits moyens d'appui (102, 130),
- des moyens d'analyse (108) de l'image de la mire (132) déformée,
- des moyens de construction (110) d'un gabarit de l'empreinte à partir de l'empreinte ainsi capturée et de l'image de la mire (132) ainsi analysée,
- des moyens de vérification (114) de l'identité de la personne ou des moyens d'authentification (114) de la personne à partir du gabarit ainsi construit.

2. Dispositif d'identification ou d'authentification (100) selon la revendication 1, **caractérisé en ce que** les moyens d'appui (102, 130) comprennent un cadre rigide (128) solidaire du fond (130) et formant avec ce dernier un réceptacle dans lequel le bloc transparent (102) est contraint.

3. Dispositif d'identification ou d'authentification (100) selon l'une des revendications 1 ou 2, **caractérisé en ce que** la mire (132) est transparente pour certaines longueurs d'onde et opaque pour d'autres.

4. Dispositif d'identification ou d'authentification (100) selon l'une des revendications 1 à 3, **caractérisé en ce que** la surface du bloc transparent (102) présentant la mire (132) est préformée en fonction du type d'empreinte pouvant être identifiée.

5. Dispositif d'identification ou d'authentification (100) selon l'une des revendications 1 à 4, **caractérisé en ce que** le bloc transparent (102) est du type enveloppe de silicone contenant du gel de silicone ou un liquide.

6. Dispositif d'identification ou d'authentification (100) selon l'une des revendications 1 à 5, **caractérisé en ce que** l'axe de visée du moyen de capture (106) est orthogonal au fond (130).

7. Dispositif d'identification ou d'authentification (100) selon l'une des revendications 1 à 5, **caractérisé en ce que** l'axe de visée du moyen de capture (126) forme avec la normale au fond (130) un angle supérieur à l'angle limite de réflexion totale du bloc transparent (102).

8. Dispositif d'identification ou d'authentification (100) selon l'une des revendications 1 à 7, **caractérisé en ce que** les moyens de construction (110) du gabarit de l'empreinte comprennent des moyens de calcul d'une transformation géométrique de la mire (132) déformée en la mire (132) non déformée, des moyens de transformation géométrique prévus pour appliquer ladite transformation géométrique ainsi calculée à l'image capturée de l'empreinte, et des moyens de génération d'un gabarit à partir de l'image ainsi transformée de l'empreinte.

9. Dispositif d'identification ou d'authentification (100) selon l'une des revendications 1 à 7, **caractérisé en ce que** les moyens de construction (110) du gabarit de l'empreinte comprennent des moyens d'approximation de la surface tridimensionnelle de la mire (132), des moyens d'application de l'image capturée de l'empreinte sur la surface tridimensionnelle ainsi approximée, et des moyens de génération d'un gabarit à partir de l'image ainsi transformée de l'empreinte.

10. Procédé d'identification ou d'authentification (200) d'une personne par son empreinte, **caractérisé en ce qu'**il comprend les étapes:
- de mise en appui (202) de l'empreinte à identifier sur un bloc transparent (102) supporté par un fond transparent (130), la surface du bloc transparent (102) sur laquelle la partie du corps portant l'empreinte vient appuyer présente une mire (132), le bloc transparent (102) étant constitué d'un matériau souple qui se déforme et épouse la forme de la partie du corps portant l'empreinte lorsque celle-ci appuie dessus,
- de capture (206) d'une image de l'empreinte et de la mire (132) à travers lesdits moyens d'appui (102, 130),
- d'analyse (208) de l'image de la mire (132) déformée,
- de construction (210) d'un gabarit de l'empreinte à partir de l'image de l'empreinte ainsi capturée et de la mire (132) ainsi analysée,
- de vérification (214) de l'identité de la personne ou d'authentification (214) de la personne à partir du gabarit ainsi construit.

11. Procédé d'identification ou d'authentification selon la revendication 10, **caractérisé en ce que** l'étape de construction du gabarit de l'empreinte comprend une étape de calcul d'une transformation géométrique de la mire (132) déformée en la mire (132) non déformée, une étape d'application de ladite transformation géométrique ainsi calculée à l'image capturée de l'empreinte, et une étape de génération d'un gabarit à partir de l'image ainsi transformée de l'empreinte.

12. Procédé d'identification ou d'authentification selon la revendication 10, **caractérisé en ce que** l'étape de construction du gabarit de l'empreinte comprend une étape d'approximation de la surface tridimensionnelle de la mire (132), une étape d'application de l'image capturée de l'empreinte sur la surface tridimensionnelle ainsi approximée, et une étape de génération d'un gabarit à partir de l'image ainsi transformée de l'empreinte.

## Patentansprüche

1. Vorrichtung zur Identifizierung oder Authentifizierung (100) einer Person durch ihren Abdruck, wobei die Vorrichtung zur Identifizierung oder Authentifizierung (100) enthält:
- Auflageeinrichtungen (102, 130), die einen durchsichtigen Boden (130) und einen von dem Boden (130) getragenen durchsichtigen Block (102) enthalten, auf dem der den Abdruck tragende Teil des Körpers in Auflage kommt, wobei die Oberfläche des durchsichtigen Blocks (102), auf der der den Abdruck tragende Teil des Körpers in Auflage kommt, ein Messraster (132) aufweist, wobei der durchsichtige Block (102) aus einem elastischen Material besteht, das sich verformt und die Form des den Abdruck tragenden Teils des Körpers annimmt, wenn dieser darauf in Auflage kommt,
- eine Erfassungseinrichtung (106, 126) eines Bilds des Abdrucks und des Messrasters (132) durch die Auflageeinrichtungen (102, 130) hindurch,
- Analyseeinrichtungen (108) des Bilds der verformten Messrasters (132),
- Einrichtungen (110) zum Bilden eines Modells des Abdrucks ausgehend von dem so erfassten Abdruck und dem so analysierten Bild des Messrasters (132),
- Überprüfungseinrichtungen (114) der Identität der Person oder Authentifizierungseinrichtungen (114) der Person ausgehend vom so gebildeten Modell.

2. Vorrichtung zur Identifizierung oder Authentifizierung (100) nach Anspruch 1, **dadurch gekennzeichnet, dass** die Auflageeinrichtungen (102, 130) einen steifen Rahmen (128) enthalten, der fest mit dem Boden (130) verbunden ist und mit diesem einen Behälter formt, in den der durchsichtige Block (102) eingespannt ist.

3. Vorrichtung zur Identifizierung oder Authentifizierung (100) nach einem der Ansprüche 1 oder 2, **dadurch gekennzeichnet, dass** das Messraster (132) für bestimmte Wellenlängen durchsichtig und für andere undurchsichtig ist.

4. Vorrichtung zur Identifizierung oder Authentifizierung (100) nach einem der Ansprüche 1 bis 3, **dadurch gekennzeichnet, dass** die das Messraster (132) aufweisende Oberfläche des durchsichtigen Blocks (102) abhängig von der Art des identifizierbaren Abdrucks vorgeformt ist.

5. Vorrichtung zur Identifizierung oder Authentifizierung (100) nach einem der Ansprüche 1 bis 4, **dadurch gekennzeichnet, dass** der durchsichtige Block (102) von der Art Silikonhülle ist, die ein Silikongel oder eine Flüssigkeit enthält.

6. Vorrichtung zur Identifizierung oder Authentifizierung (100) nach einem der Ansprüche 1 bis 5, **dadurch gekennzeichnet, dass** die Peilrichtung der Erfassungseinrichtung (106) orthogonal zum Boden (130) ist.

7. Vorrichtung zur Identifizierung oder Authentifizierung (100) nach einem der Ansprüche 1 bis 5, **dadurch gekennzeichnet, dass** die Peilrichtung der Erfassungseinrichtung (126) mit der Normalen zum Boden (130) einen größeren Winkel als der Gesamtreflexionsgrenzwinkel des durchsichtigen Blocks (102) bildet.

8. Vorrichtung zur Identifizierung oder Authentifizierung (100) nach einem der Ansprüche 1 bis 7, **dadurch gekennzeichnet, dass** die Einrichtungen (110) zum Bilden des Modells des Abdrucks Einrichtungen zur Berechnung einer geometrischen Umwandlung des verformten Messrasters (132) in das nicht verformte Messraster (132), Einrichtungen zur geometrischen Umwandlung, die vorgesehen sind, um die so berechnete geometrische Umwandlung auf das erfasste Bild des Abdrucks anzuwenden, und Einrichtungen zur Erzeugung eines Modells ausgehend von dem so umgewandelten Bild des Abdrucks enthalten.

9. Vorrichtung zur Identifizierung oder Authentifizierung (100) nach einem der Ansprüche 1 bis 7, **dadurch gekennzeichnet, dass** die Einrichtungen (110) zum Bilden des Modells des Abdrucks Einrichtungen zur Näherung der dreidimensionalen Oberfläche des Messrasters (132), Einrichtungen zur Anwendung des erfassten Bilds des Abdrucks auf die so genäherte dreidimensionale Oberfläche und Einrichtungen zur Erzeugung eines Modells ausgehend vom so umgewandelten Bild des Abdrucks enthalten.

10. Verfahren zur Identifizierung oder Authentifizierung (200) einer Person durch ihren Abdruck, **dadurch gekennzeichnet, dass** es die folgenden Schritte enthält:
- Auflegen (202) des zu identifizierenden Abdrucks auf einen von einem durchsichtigen Boden (130) getragenen durchsichtigen Block (102), wobei die Oberfläche des durchsichtigen Blocks (102), auf die der den Abdruck tragende Teil des Körpers aufgelegt wird, ein Messraster (132) aufweist, wobei der durchsichtige Block (102) aus einem elastischen Material besteht, das sich verformt und die Form des den Abdruck tragenden Teils des Körpers annimmt, wenn dieser darauf aufgelegt wird,
- Erfassung (206) eines Bilds des Abdrucks und des Messrasters (132) durch die Auflageeinrichtungen (102, 130) hindurch,
- Analyse (208) des Bilds des verformten Messrasters (132),
- Bilden (210) eines Modells des Abdrucks ausgehend von dem so erfassten Bild des Abdrucks und dem so analysierten Messraster (132),
- Überprüfung (214) der Identität der Person oder der Authentifizierung (214) der Person ausgehend vom so gebildeten Modell.

11. Verfahren zur Identifizierung oder Authentifizierung nach Anspruch 10, **dadurch gekennzeichnet, dass** der Schritt des Bildens des Modells des Abdrucks einen Schritt der Berechnung einer geometrischen Umwandlung des verformten Messrasters (132) in das nicht verformte Messraster (132), einen Schritt der Anwendung der so berechneten geometrischen Umwandlung auf das erfasste Bild des Abdrucks und einen Schritt der Erzeugung eines Modells ausgehend vom so umgewandelten Bild des Abdrucks enthält.

12. Verfahren zur Identifizierung oder Authentifizierung nach Anspruch 10, **dadurch gekennzeichnet, dass** der Schritt des Bildens des Modells des Abdrucks einen Schritt der Näherung der dreidimensionalen Oberfläche des Messrasters (132), einen Schritt der Anwendung des erfassten Bilds des Abdrucks auf die so genäherte dreidimensionale Fläche und einen Schritt der Erzeugung eines Modells ausgehend von dem so umgewandelten Bild des Abdrucks enthält.

## Claims

1. Device (100) for identifying or authenticating a person by means of his print, the identification or authentication device (100) comprising:
- bearing means (102, 130) comprising a transparent base (130) and a transparent block (102) supported by said base (130) and on which the part of the body carrying the print is pressed, the surface of the transparent block (102) on which the part of the body carrying the print is pressed having a test chart (132), the transparent block (102) consisting of a flexible material that deforms and fits the shape of the part of the body carrying the print when the latter is pressed thereon,
- a means (106, 126) of capturing an image of said print and of the test chart (132) through said bearing means (102, 130),
- means (108) of analysing the image of the deformed test chart (132),
- means (110) of constructing a template of the print using the image of the test chart (132) thus analysed,
- means (114) of verifying the identity of the person or means (114) for authenticating the person from the template thus constructed.

2. Identification or authentication device (100) according to claim 1, **characterised in that** the bearing means (102, 130) comprise a rigid frame (128) secured to the base (130) and forming with the latter a receptacle in which the transparent block (102) is constrained.

3. Identification or authentication device (100) according to one of claims 1 or 2, **characterised in that** the test chart (132) is transparent for certain wavelengths and opaque for others.

4. Identification or authentication device (100) according to one of claims 1 to 3, **characterised in that** the surface of the transparent block (102) having the test chart (132) is preformed according to the type of print that may be identified.

5. Identification or authentication device (100) according to one of claims 1 to 4, **characterised in that** the transparent block (102) is of the silicone envelope type containing silicone gel or a liquid.

6. Identification or authentication device (100) according to one of claims 1 to 5, **characterised in that** the axis of sight of the capture means (106) is orthogonal to the base (130).

7. Identification or authentication device (100) according to one of claims 1 to 5, **characterised in that** the axis of sight of the capture means (126) forms, with the normal to the base (130), an angle greater than the total reflection limit angle of the transparent block (102).

8. Identification or authentication device (100) according to one of claims 1 to 7, **characterised in that** the means (110) of constructing the template of the print comprise means of calculating a geometric transformation of the deformed test chart (132) into the non-deformed test chart (132), geometric transformation means provided for applying said geometric transformation thus calculated to the captured image of the print, and means of generating a template from the thus transformed image of the print.

9. Identification or authentication device (100) according to one of claims 1 to 7, **characterised in that** the means (110) of constructing the template of the print comprise means of approximating the three-dimensional surface of the test chart (132), means of applying the captured image of the print on the three-dimensional surface thus approximated, and means of generating a template from the thus transformed image of the print.

10. Method (200) of identifying or authenticating a person by means of his print, **characterised in that** it comprises the steps of:
- pressing (202) the print to be identified on a transparent block (102) supported by a transparent base (130), the surface of the transparent block (102) on which the part of the body carrying the print is pressed has a test chart (132), the transparent block (102) consisting of a flexible material that deforms and fits the shape of the part of the body carrying the print when the latter is pressed thereon,
- capturing (206) an image of the print and of the test chart (132) through said bearing means (102, 130),
- analysing (208) the image of the deformed test chart (132),
- constructing (210) a template of the print from the image of the test chart (132) thus analysed,
- verifying (214) the identity of the person or authenticating (214) the person from the test chart thus constructed.

11. Identification or authentication method according to claim 10, **characterised in that** the step of constructing the template of the print comprises a step of calculating a geometric transformation of the deformed test chart (132) into the non-deformed test chart (132), a step of applying said geometric transformation thus calculated to the captured image of the print, and a step of generating a template from the thus transformed image of the print.

12. Identification or authentication method according to claim 10, **characterised in that** the step of constructing the template of the print comprises a step of approximating the three-dimensional surface of the test chart (132), a step of applying the captured image of the print to the three-dimensional surface thus approximated, and a step of generating a template from the thus transformed image of the print.
